# EUROPÄISCHE PATENTSCHRIFT

(11) **EP 0 976 130 B1**
(45) Veröffentlichungstag und Bekanntmachung des Hinweises auf die Patenterteilung: **27.11.2002**
(21) Anmeldenummer: 97954392.3
(22) Anmeldetag: 12.12.1997
(51) Int. Cl.: G11B 7/26

(54) **MASTER FÜR DIE HERSTELLUNG OPTISCHER PLATTEN**
MASTER FOR PRODUCING OPTICAL DISCS
MODELE-MAITRE POUR LA FABRICATION DE PLAQUES OPTIQUES

(30) Priorität: 19.12.1996 DE 19653078
(43) Veröffentlichungstag der Anmeldung: 02.02.2000
(73) Patentinhaber: Innovators AG, 8212 Neuhausen am Rheinfall (CH)
(72) Erfinder: Innovators AG, 8212 Neuhausen am Rheinfall (CH)
(74) Vertreter: Haber, Jan Wilhelm
(86) Internationale Anmeldenummer: EP9706985
(87) Internationale Veröffentlichungsnummer: WO98027551

(56) Entgegenhaltungen:
- EP-A- 0 418 897
- US-A- 4 729 940
- US-A- 5 494 782
- PATENT ABSTRACTS OF JAPAN vol. 013, no. 228 (P-877), 26.Mai 1989 & JP 01 037738 A (HITACHI CHEM CO LTD), 8.Februar 1989,

## Beschreibung

Die Erfindung betrifft ein Verfahren zur Herstellung einer Preßform (Stamper) für die Abformung eines informationstragenden optischen Speichermediums (Compact Disk, CD), wobei in einem Verfahrensschritt entsprechend der zu speichernden Information Spuren mit einem Laserstrahl in die von einer Deckschicht überzogene metallische Oberfläche eines Rohlings eingebrannt werden.

Ein solches Verfahren ist in der EP-A-418897 beschrieben. Dort wird die Metallschicht, mit der die Spuren gefüllt worden sind, vom Substrat abgehoben um somit einen Master zu erhalten, von dem in einem weiteren Schritt ein Stamper abgeformt wird. Dieses Verfahren ist aufwendig und teuer.

Generell sind im Wesentlichen zwei Verfahren zur Herstellung eines Stampers bekannt. In einem ersten Verfahren ("Photoresist Mastering") wird ein Rohling in Form einer Glasplatte mit einer photosensiblen Oberfläche mittels eines fokussierten Laserstrahles belichtet. Bei der chemischen Entwicklung der photosensiblen Oberfläche bilden die belichteten Stellen Vertiefungen aus, während die Oberfläche zwischen den belichteten Stellen nicht angegriffen wird. In einem anderen Verfahren ("Non Photoresist Mastering") wird der Rohling mit einer Schicht aus organischem Material (organic dye) versehen. In diese Schicht werden mittels eines Laserstrahles Vertiefungen direkt eingebrannt bzw. eingeschmolzen.

Der auf eine der genannten Arten hergestellte Glasmaster wird mit einer dünnen Metallschicht überzogen, bevor in einem elektrolytischen Prozeß die Vertiefungen aufgefüllt und ein Sockel angeformt wird (Elektroforming). Der Sockel mit den erhabenen Datenstrukturen wird vom Glasmaster getrennt und gereinigt und ist danach als Stamper zu benutzen.

Die Fertigung der CD's erfolgt in einer Spritzgußkammer, in der optisches Polykarbonat unter hohem Druck auf den Stamper gespritzt wird. Danach werden der Stamper und die fertige CD mit Preßluft voneinander getrennt und die Oberfläche der CD verspiegelt und lackiert.

Nachteil der bekannten Verfahren ist, daß sie wegen der vielen Verfahrenschritte sehr aufwendig und teuer sind. Außerdem sind die durch Elektroforming gefertigten Stamper vergleichsweise kurzlebig, da das im galvanischen Prozeß aufgebaute Metall eine geringe Festigkeit besitzt. So können mit einem Stamper lediglich einige Tausend CD's gepreßt werden, bevor die Qualität des Stampers wegen der extremen Verhältnisse in der Spritzgußmaschine (1800 atü und 380°C) verloren gegangen ist.

Aufgabe der Erfindung ist es ein Verfahren zu schaffen, mit dem sich bei geringen Zeitaufwand und geringen Kosten wiederstansfähige Stamper für die Abformung von optischen Speichermedien (Compact Disks) herstellen lassen.

Diese Aufgabe wird durch ein Verfahren mit dem kennzeichnenden Merkmal des Anspruch 1 gelöst.

Dabei ist es besonders vorteilhaft, den Rohling als Scheibe aus Metall insbesondere aus Blech zu fertigen. Durch das erfindungsgemäße Verfahren lassen sich kostengünstig Stamper herstellen und damit die Kosten für die Fertigung von Compact Disks senken. Die Ersparnis resultiert zum einen aus der Einsparung von Verfahrensschritten. So wird einerseits die Ferigung der rohen Glasplatten eingegespart und andererseits wird das energieintensive Elektroforming durch einen weniger Strom verbrauchenden galvanischen Prozeß ersetzt, bei dem bedeutend weniger Metall abgeschieden werden muß.

Außerdem sind die mit dem erfindungsgemäßen Verfahren gefertigten Stamper besonders wiederstandsfähig, da ihre Sockelplatte aus kalt gewalztem Blech besteht, das in hochreinem Zustand mit spiegelnder Oberfläche auf dem Markt zu erhalten ist. Als Metall für den Rohling wird vorteilhafterweise Nickel einer Reinheit von insbesondere 99,5 % verwendet. Das gewalzte Nickel-Blech ist aufgrund seiner verdichteten Kristallstruktur härter als das beim Elektroforming abgeschiedene Metall. Das gewalzte Blech braucht lediglich in der gewünschten Form ausgestanzt oder geschnitten zu werden. Durch Schleifen und Polieren kann die Qualität des Metallrohlings jedoch weiter erhöht werden.

Die reine Scheibe aus Metall wird vorteilhafterweise auf der zu beschreibenden Oberfläche zunächst mit einem Haftgrund (Primer) versehen, der für einen guten Halt der nachfolgend aufzubringenden Lackschicht sorgt und der ein Einsickern von Säure unter den Lack im galvanischen Bad verhindert. Um eine homogene Verteilung der auf den Primer aufzubringenden Lackschicht zu erhalten, wird der Lack oder ein Harz, in einer Zentrifuge auf den Metallrohling aufgespritzt. Damit kann eine gleichbleibende Stärke des Lackes von wenigen Mikrometern erzeugt werden.

In die Deckschicht aus Lack brennt ein Laserstrahl entsprechend der zu speichernden Information Spuren in Form von Vertiefungen ein, deren Tiefe der Dicke der Deckschicht entspricht. Am Boden der Spuren wird die Oberfläche des Metallrohlings freigelegt. Dabei ist vorteilhaft, daß die Oberfläche des Rohlings unempfindlich gegen Intensitätsschwankungen des beschreibenden Laserstrahles ist, da der Laserstrahl bis auf den metallischen Boden des Metallrohlings brennt und dort nur unter Leistungssteigerung eine Beschädigung hervorrufen kann.

Um eine einfache Trennung des Stampers von der fertigen CD zu gewährleisten ist es vorteilhaft die strukturierte Oberfläche des Stampers mit einer dünnen Schicht aus Platin zu versehen insbesondere zu bedampfen. Damit wird ein Ausgleich Rauhigkeiten auf dem Stamper erreicht, so daß sich der Kunststoff nicht in eventuellen Poren in den galvanisierten Spuren festsetzen kann.

Das erfindungsgemäße Verfahren wird anhand der Zeichnungen dargestellt und wird im folgenden näher beschrieben.

Es zeigen:
- **Figur 1**: einen Schnitt durch die Oberfläche eines Rohlings beim Schreiben,
- **Figur 2**: einen Schnitt durch die Oberfläche eines Rohlings beim Galvanisieren und
- **Figur 3**: die Oberfläche eines fertigen Stampers.

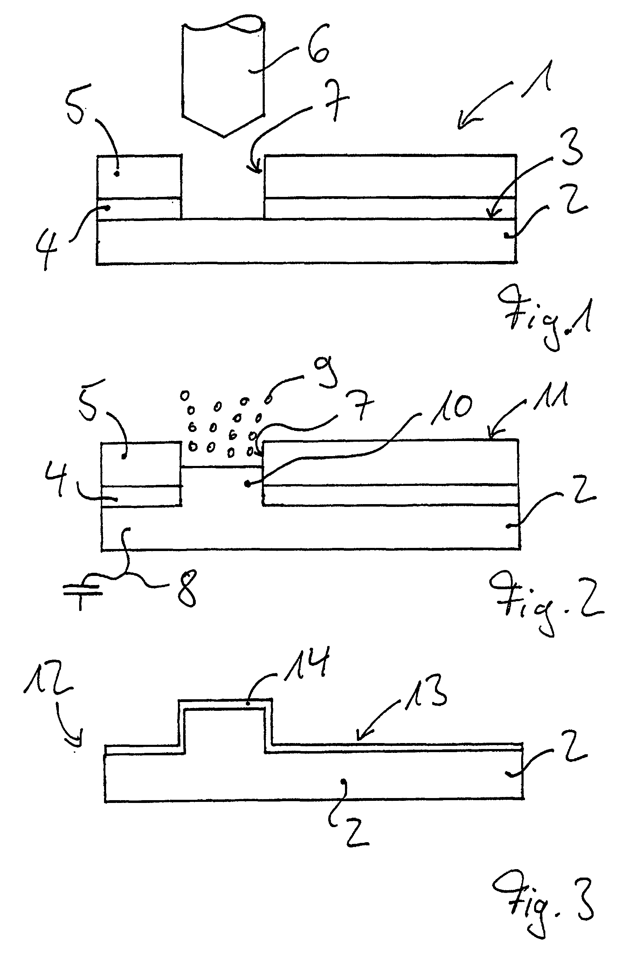

Figur 1 zeigt einen Rohling 1, der als Basis eine Scheibe 2 aus Metall insbesondere aus Nickel einer Reinheit von 99,5% aufweist. Die Scheibe 2 wurde in der entsprechenden Form aus Blech geschnitten oder gestanzt. Die Oberfläche 3 der Scheibe 2 ist geschliffen und hochglanzpoliert und mit einer Schicht Haftgrund 4 (Primer) überzogen. Der Primer 4 sorgt für die Versiegelung der Oberfläche 3 und bildet die Basis für eine Deckschicht 5. Die Deckschicht 5 ist ein Kunstharzlack, der gute Absorbtionseigenschaften für Licht definierter Wellenlänge aufweist. Die Dicke der Schichten ist in den Figuren nicht maßstabsgetreu dargestellt. Während die Metallscheibe 2 eine Dicke von mehreren Millimetern aufweist, ist der Primer 4 sehr dünn aufgetragen. Die Dicke der Deckschicht 5 beträgt einige Mikrometer.

Ein Laserstrahl 6 brennt unter kontinuierlicher Drehung des Rohlings 1 eine Vertiefung 7 in die Deckschicht 5, wobei die Vertiefung 7 bis auf die Oberfläche 3 reicht, so daß die Oberfläche 3 blank liegt. Die Wellenlänge des Laserstrahles 6 ist auf die Absorbtionseigenschaften der Deckschicht 5 abgestimmt. Die Vertiefungen 7 bilden Spuren in denen die Information gespeichert ist. Dabei ist zu beachten, daß die Drehrichtung des Rohlings 1 beim Beschreiben entgegengesetzt der Laufrichtung der späteren Compakt Disk ist. Die Information wird spiegelbildlich auf den Rohling aufgebracht.

In Figur 2 ist der Schreibvorgang abgeschlossen. Der gereinigte Rohling 1 kommt in ein galvanisches Bad, wobei die Scheibe 2 über eine Leitung 8 auf ein entsprechendes Potential gelegt wird. Bei der Elektrolyse werden Metallionen 9 bewegt und setzen sich als Metallerhebung 10 auf der Oberfläche 3 ab. Die Zusammensetzung des elektrolytischen Bades ist so, daß sich Metall entsprechend der Metall der Scheibe 2 in diesem Falle also Nickel absetzt.

Bei der Elektrolyse werden somit die Vertiefungen 7 aufgefüllt. Die Stärke der Metallerhebung 10 wird über die Zeit, die die elektrische Spannung anliegt, eingestellt. Der elektrolytische Prozeß wird abgebrochen sobald die Vertiefungen 7 bis etwa 1,5 Mikrometer jedoch höchstens bis zur Oberfläche 11 der Deckschicht 5 aufgefüllt sind.

Nach dem galvanischen Prozeß wird die verbleibende Deckschicht 5 und der Primer 4 mittels eines Laserstrahles entfernt. Nach einer letzten Reinigung liegt der fertige Stamper 12 mit den Metallerhebungen 10 gebrauchsfertig vor (Figur 3). Zur Veredelung des Stampers 12 wird die Druckfläche 13 mit einer Schicht Platin 14 bedampft.

Mit dem beschriebenen Verfahren lassen sich nicht nur Stamper 12 direkt herstellen, wenn die Glasscheibe im bekannten Verfahren durch eine Metallscheibe ersetzt wird lassen sich auch sehr wiederstandsfähige Masterdisks zur Herstellung von Stampern fertigen.

## Patentansprüche

1. Verfahren zur Herstellung einer Preßform (Stamper) für die Abformung eines informationstragenden optischen Speichermediums, wobei in einem ersten Verfahrensschritt entsprechend der zu speichernden Information Spuren mit einem Laserstrahl (6) in die von einer Deckschicht (5) überzogene metallische Oberfläche (3) eines Rohlings (1) eingebrannt werden, **dadurch gekennzeichnet, daß** in einem weiteren Verfahrensschritt die Spuren (7) in einem galvanischen Prozeß mit Metall aufgefüllt werden.

2. Verfahren nach Anspruch 1
**dadurch gekennzeichnet, daß** der Rohling (1) eine Scheibe (2) aus Metall ist.

3. Verfahren nach Anspruch 1 oder 2,
**dadurch gekennzeichnet, daß** der Rohling (1) aus Blech geschnitten oder gestanzt wird.

4. Verfahren den Ansprüchen 1 bis 3,
**dadurch gekennzeichnet, daß** eine Oberfläche (3) des Rohlings in einem ersten Verfahrensschritt geschliffen und poliert wird.

5. Verfahren nach den Ansprüchen 1 bis 4,
**dadurch gekennzeichnet, daß** die polierte Oberfläche (3) des Rohlings mit einem Haftgrund (4) (Primer) versehen wird.

6. Verfahren nach den Ansprüchen 1 bis 5,
**dadurch gekennzeichnet, daß** die Oberfläche (3) des Rohlings (1) mit einer Deckschicht (5) der Dicke von wenigen Mikrometern aus insbesondere organischem Lack versehen wird.

7. Verfahren nach den Ansprüchen 1 bis 6,
**dadurch gekennzeichnet, daß** ein Laserstrahl (6) entsprechend der zu speichernden Information Spuren in Form von Vertiefungen (7) in die Deckschicht (5) einbrennt, deren Tiefe der Dicke der Deckschicht (5) entspricht, so daß der Boden der Spuren von der metallischen Oberfläche des Rohlings (1) gebildet ist.

8. Verfahren nach den Ansprüchen 1 bis 7,
**dadurch gekennzeichnet, daß** in einem elektrolytischen Prozeß die Vertiefungen (7) mit einem Metall aufgefüllt werden, wobei der elektrolytischen Prozeß abgebrochen wird sobald die Spuren bis zur Oberfläche (11) der Deckschicht (5) insbesondere sobald etwa 1,5 Mikrometer aufgefüllt sind.

9. Verfahren nach Anspruch 8,
**dadurch gekennzeichnet, daß** das Metall dem Metall der Scheibe (2) entspricht.

10. Verfahren nach den Ansprüchen 1 bis 8,
**dadurch gekennzeichnet, daß** die verbleibende Deckschicht (5) entfernt wird.

11. Verfahren nach Anspruch 10,
**dadurch gekennzeichnet, daß** die verbleibende Deckschicht (5) mittels eines Laserstrahles entfernt wird.

12. Verfahren nach den vorherigen Ansprüche,
**dadurch gekennzeichnet, daß** der Rohling (1) zwischen den Verfahrensschritten gereinigt wird.

13. Verfahren nach den vorherigen Ansprüche,
**dadurch gekennzeichnet, daß** der Rohling aus Nickel einer Reinheit von insbesondere 99,5 % ist.

14. Verfahren nach den vorherigen Ansprüche,
**dadurch gekennzeichnet, daß** der fertige Stamper (12) mit einer dünnen Schicht aus Platin (14) bedeckt wird.

15. Verfahren nach den vorherigen Ansprüche,
**dadurch gekennzeichnet, daß** die Information beim Schreibvorgang spiegelbildlich im Verhältnis zu der zu fertigenden Compakt Disk in die Deckschicht (5) eingebrannt wird

## Claims

1. Method for the production of a stamper for the copy-molding of an information-carrying optical storage medium, whereby in a first process step tracks corresponding to the information to be stored are burned by a laser beam (6) into the metallic surface (3), coated with a covering layer (5), of a blank (1), **characterized in that,** in a further process step the tracks (7) are filled up with metal in a galvanic process.

2. Method according to Claim 1, **characterized in that** the blank (1) is a disc (2) made from metal.

3. Method according to Claim 1 or 2, **characterized in that** the blank (1) is cut or stamped out of sheet metal.

4. Method according to Claims 1 to 3, **characterized in that** one surface (3) of the blank is ground and polished in a first process step.

5. Method according to Claims 1 to 4, **characterized in that** the polished surface (3) of the blank is coated with a primer (4).

6. Method according to Claims 1 to 5, **characterized in that** the surface (3) of the blank (1) is coated with a covering layer (5), particularly an organic coating, of a thickness of a few micrometers.

7. Method according to Claims 1 to 6, **characterized in that** a laser beam (6) burns tracks corresponding to the information to be stored in the form of depressions (7) in the covering layer (5), the depth of said depressions (7) corresponding to the thickness of the covering layer (5) so that the bottom of the tracks is formed by the metallic surface of the blank (1).

8. Method according to Claims 1 to 7, **characterized in that** the depressions (7) are filled up with a metal in an electrolytic process, whereby the electrolytic process is interrupted as soon as the tracks have been filled approximately 1.5 micrometers up to the surface (11) of the covering layer (5).

9. Method according to Claim 8, **characterized in that** the metal is the same metal as that of the disc (2).

10. Method according to Claims 1 to 8, **characterized in that** the remaining covering layer (5) is removed.

11. Method according to Claim 10, **characterized in that** the remaining covering layer (5) is removed by means of a laser beam.

12. Method according to the preceding claims, **characterized in that** the blank (1) is cleaned between the process steps.

13. Method according to the preceding claims, **characterized in tha**t the blank is made of nickel with a purity of especially 99.5%.

14. Method according to the preceding claims, **characterized in that** the finished stamper (12) is coated with a thin layer of platinum (14).

15. Method according to the preceding claims, **characterized in that,** during the writing process, the information is burned into the covering layer (5) as a mirror image relative to the compact disc to be produced.

## Revendications

1. Un procédé pour la fabrication d'une matrice (stamper), qui est destinée au moulage d'un support de mémorisation optique porteur d'informations, cependant que, dans une première étape du procédé, un rayon (6) laser permet de brûler des pistes, en fonction de l'information à emmagasiner, dans ta surface (3) supérieure métallique d'une galette (1), qui est recouverte d'une couche (5) de couverture, **caractérisé en ce que**, dans une étape ultérieure du procédé, les pistes (7) sont remplies de métal dans un processus de galvanisation.

2. Un procédé conforme à la revendication n° 1, **caractérisé en ce que** la galette (1) est constituée d'un disque (2) de métal.

3. Un procédé conforme à la revendication n° 1 ou n° 2, **caractérisé en ce que** la galette (1) est découpée ou estampée à partir d'une plaque de métal.

4. Un procédé conforme aux revendications n° 1 à n° 3, **caractérisé en ce que,** dans une première étape du procédé, une surface (3) supérieure de la galette est meulée et polie.

5. Un procédé conforme aux revendications n° 1 à n° 4, **caractérisé en ce que** la surface (3) supérieure polie de la galette est pourvue d'une couche (4) passivante (primer).

6. Un procédé conforme aux revendications n° 1 à n° 5, **caractérisé en ce que** la surface (3) supérieure de la galette (1) est pourvue d'une couche (5) de couverture, de l'épaisseur de peu de micromètres, constituée en particulier de vernis organique.

7. Un procédé conforme aux revendications n° 1 à n° 6, **caractérisé en ce que,** en fonction de l'information à emmagasiner, dans la couche (5) de couverture, un rayon (6) laser brûle des pistes en forme de creux (7), dont la profondeur correspond à l'épaisseur de la couche (5) de couverture, de façon à ce que le fond des pistes soit constitué par la surface supérieure métallique de la galette (1).

8. Un procédé conforme aux revendications n° 1 à n° 7, **caractérisé en ce que** les creux (7) sont remplis d'un métal au cours d'un processus d'électrolyse, cependant que le processus d'électrolyse est interrompu, dès que les pistes sont remplies jusqu'à hauteur de la surface (11) supérieure de la couche (5) de couverture, et en particulier remplies jusqu'à 1,5 micromètre environ.

9. Un procédé conforme à la revendication n° 8, **caractérisé en ce que** le métal correspond au métal du disque (2).

10. Un procédé conforme aux revendications n° 1 à n° 8, **caractérisé en ce que** la couche (5) de couverture restante est éliminée.

11. Un procédé conforme à la revendication n° 10, **caractérisé en ce que** la couche (5) de couverture restante est éliminée au moyen d'un rayon laser.

12. Un procédé conforme aux revendications précédentes, **caractérisé en ce que** la galette (1) est nettoyée entre les étapes du procédé.

13. Un procédé conforme aux revendications précédentes, **caractérisé en ce que** la galette est constituée de nickel, en particulier d'une pureté de 99,5 %.

14. Un procédé conforme aux revendications précédentes, **caractérisé en ce que** la matrice (12) terminée est recouverte d'un mince film de platine (14).

15. Un procédé conforme aux revendications précédentes, **caractérisé en ce que**, pendant le processus d'écriture, l'information est brûlée dans la couche (5) de couverture de façon énantiomorphe par rapport au compact-disc, qui est à fabriquer.
